(19) **Europäisches Patentamt European Patent Office Office européen des brevets**

(11) **EP 1 405 013 B1**

(12) **EUROPEAN PATENT SPECIFICATION**

(45) Date of publication and mention of the grant of the patent:
**07.01.2009 Bulletin 2009/02**

(51) Int Cl.:
**F24F 11/00** (2006.01)   **H02J 9/06** (2006.01)

(21) Application number: **02747252.1**

(22) Date of filing: **14.06.2002**

(86) International application number:
**PCT/DK2002/000403**

(87) International publication number:
**WO 2003/001123 (03.01.2003 Gazette 2003/01)**

(54) **EMERGENCY OPERATION OF ELECTRICAL OPERATOR DEVICES FOR MOVABLE MEMBERS**

NOTBETRIEB ELEKTRISCHER BETRIEBSVORRICHTUNGEN FÜR BEWEGLICHE GLIEDER

FONCTIONNEMENT D'URGENCE DE DISPOSITIFS ELECTRIQUES POUR ELEMENTS MOBILES

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.06.2001 DK 200100972**

(43) Date of publication of application:
**07.04.2004 Bulletin 2004/15**

(73) Proprietor: **VKR Holding A/S
2970 Hørsholm (DK)**

(72) Inventors:
- **DARUM, Jesper
  DK-2605 Brondby (DK)**
- **ANDERSEN, Kim, Arthur, Stück
  DK-2990 Niva (DK)**

(74) Representative: **Nielsen, Kim Garsdal et al
Internationalt Patent-Bureau A/S
Rigensgade 11
1316 Copenhagen K (DK)**

(56) References cited:
**GB-A- 2 208 571**     **US-A- 4 729 124**
**US-A- 5 811 975**

**Description**

The present invention relates to method and a control system for controlling the operation of electrical operator devices for movable members by data communication from central control means, said operator devices being connected with a mains power supply and being connectable with emergency power supply means for emergency operation, whereby an operability test for said operator devices is conducted at regular time intervals and emergency operation may be enabled by power supply from said emergency power supply means in case of dropout of said mains power supply, where during said emergency operation power supply to the operator devices is generally disconnected and said operability test is conducted by temporary connection of power supply from said emergency power supply means to the operator devices, and where said general disconnection of power supply to the operator devices as well as the conduct of said operability test during emergency operation is effected by hazard control means provided for selective control of the operator devices in hazard situations.

Whereas the invention is applicable in general to the control of operator devices for a large variety of movable members it is mainly concerned with thee control of openable building components in the form of doors and/or windows and/or similar passive ventilation members as well as movable accessories for such members, which in certain positions may obstruct the opening or closing thereof.

Purely by way of example the invention may be applied to a ventilation system of the kind disclosed e.g. in WO 00/39506, in which operators for a number of passive ventilation devices may be controlled by a common central control unit and stringent requirements must be set to the continued operability of all operators including access to the necessary electrical operating power under all circumstances, including hazard situations like development of smoke caused by fire in the building or other causes which would require opening or closing of the passive ventilation devices.

To ensure continued operability such ventilation system must, in addition to its connection with a mains power supply have access to power for emergency operation in case of dropout of the mains power. To avoid excessive power consumption under emergency operation a typical solution would be to disconnect the emergency power supply from the operators under no load conditions. This would be in conflict, however, with the requirement to ensure continued operability, which under standard prescriptions is implemented by conduct of an operability test at regularly repeated intervals, e.g. once a minute.

In large buildings with a significant number of controlled ventilation devices like windows and/or doors and operators associated therewith the requirement to maintain continued power supply to the operators also under no-load conditions put rather heavy demands to the capacity of a emergency power supply unit such as an emergency power accumulator.

US-A-5811975 a method in which, during said emergency operation, power supply to the operator devices is generally disconnected and an operability test is conducted by temporary connection of power supply from said emergency power supply means to the operator devices.

On this background it is the object of the invention, in a typical installation, in which a number of operator devices are served by a common central control unit and a common hazard control unit for both of which continued power supply from the emergency power supply is maintained under emergency operation, to provide a method and a control system for controlling emergency operation of electrical operator devices for movable members as well as a control system for implementation of this method permitting continued conduct of a regularly repeated operability test under emergency operation, while ensuring a significantly reduced power consumption and consequently significantly reduced requirements to the capacity of the necessary emergency power supply unit such as a battery.

In accordance with the invention a method of the kind defined is characterized in that said operability test comprises transmission of an interrogation signal by said hazard control means to interface means interposed between at least one operator device and said central control means, collection by said interface means of an operator status signal for said at least one operator device and return of said operator status signal to said hazard control means.

With this method, in a typical installation, in which a number of operator devices are served by a common central control unit and a common hazard control unit for both of which continued power supply from the emergency power supply is maintained under emergency operation, the need to conduct an individual operability test for all individual operators may be eliminated by routing an interrogation signal for the operability test serially from the hazard control means through interface units interposed between the operator devices and the central and hazard control means.

Also, actual connection of each operator device to the emergency power supply, such as a battery, will under no-load conditions only be effected for the duration of the operability test, which may typically be of the order of 100 ms. Thus, with the test procedure repeated at regular intervals of 100 seconds a significant reduction of power consumption will be obtained.

Advantageous and preferred implementations of the method are stated in dependent claims 2 to 8.

For adapting the method of the invention to a typical installation, in which a number of operator devices are served by a common central control unit and a common hazard control unit for both of which continued power supply from the emergency power supply is maintained under emergency operation, the need to conduct an individual operability test for all individual operators may be eliminated by routing an interrogation signal for the operability test serially from the hazard control means through interface units interposed between the operator devices and the central and hazard control means.

Although, the hazard control means will thereby not be able to determine exactly by itself, from which operator a signalled error state or a communicated need for power supply has been sent, identification of such an operator could relatively easily be accomplished from the central control unit.

For the performance of the method a control system for the operation of electrical operator devices is characterized, according to the invention, in that means for general disconnection of power supply from the operator devices and conduct of said operability test during emergency operation comprises hazard control means for selective control of the operator devices in hazard situations, and that interface means are interposed between at least one operator device and said central control means.

Advantageous and preferred embodiments of such a control system are stated in dependent claims 10 to 12.

In the following the invention will be explained in further detail with reference to the accompanying drawing, in which

fig. 1 is a simplified block diagram representation of a computer-controlled natural ventilation system embodying the invention,

fig. 2 is a graphical representation of a bit sequence use for the interrogation and operator status signals in accordance with the method of the invention, and

fig. 3 is a diagram representation of a switching arrangement for use in the hazard control unit in fig. 1.

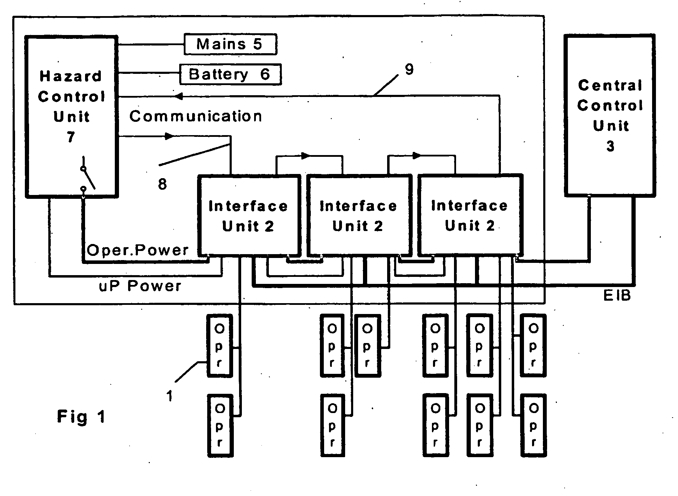

In the embodiment shown in fig. 1 operators 1 for passive ventilation devices such as windows or doors are controlled by interface means comprising interface units 2. As seen in the figure several operators may be served from the same interface unit.

The interface units 2 communicates via a bus, like e.g. an EIB-bus 4 (European Installation Bus) with a central control unit 3, from which the operation of operators 1 may be controlled independently in dependence on indoors and out doors climatic parameters.

The interface units 2 are further connected with a mains power supply 5 as well as with an emergency power supply unit 6, which may typically be a battery, but could be any conventional form of emergency power source, via a hazard control unit 7. which in addition communicates with the interface units 2 via communication lines 8 and 9.

To be able to control the operators 1 and to get information on eventual error states therein the hazard control unit 7 has serial input and output communication lines 8 and 9. The hazard control unit 7 will send interrogation commands through the output line 8 and receive status information from the interface units 2 through the input line 9.

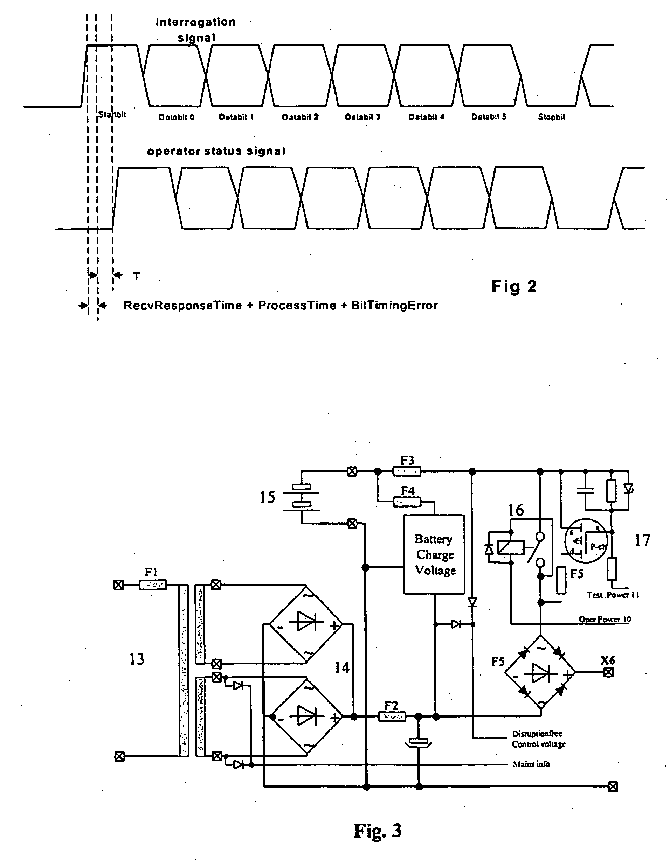

In a preferred implementation of the method according to the invention the communication between the hazard control unit 7 and the interface units 2 may be based on an asynchronous serial protocol as illustrated in fig. 2 using 6 data bits, 1 start bit and 1 stop bit. At regular time intervals, e.g. once every 100 seconds, the hazard control unit 7 will send a byte using a bit width of e.g. 11.7 ms (3/256 sec). The first four data bits will define the present condition of the hazard control unit 7, whereas the following two data bits will be zeros.

In the interface unit 2 these last two data bits will be updated to represent the status of the interface unit and the operators 1 connected therewith. The interface unit 2 will then send the completed byte (6 bit) either back to the hazard control unit 7 or to the next interface unit 2.

During emergency operation, when the system is operating on batteries, an operator power line 10 from the hazard control unit 7 to the interface units 2 will be disconnected nearly all the time and the communication and control units 2 will not be able to communicate with the operators 1. Thus, when the hazard control unit 7 needs operator status information a test procedure will be initiated, by which a sequence of interrogation and answer signals will be communicated via communication lines 8 and 9 in the form of a bit sequence as illustrated in fig. 2. In connection therewith reduced power supply is connected to the interface units 2 via a microprocessor power line 11.

As an example, the test procedure sequence may be as follows:

- Hazard control unit 7 turns motor power on line 10 on.
- The interrogation bit sequence 10 00 00, e.g. with a bit definition as explained below, will be transmitted from the hazard control unit 7 to the interface units 2.
- In response an operator status signal provided by the immediately preceding test procedure will be returned by the interface unit in the form of a bit sequence 10 00 xx, in which the last two bits "xx" will represent operator status data collected by the interface unit in the preceding test procedure.
- The hazard control unit 7 will now wait 2 seconds to allow the operator 1 to initialise and the interface unit 2 to collect data)
- After this delay a bit sequence 10 01 00, indicating that the power will be turned off, is transmitted from the hazard control unit.

- In response to this new interrogation signal the bit sequence 10 01 xx, in which the two last bits have now been updated with the actual operator status, is returned by the interface unit to the hazard control unit.
- Power supply to the operators will now be turned of, unless the interface unit has indicated a need for power to be supplied to the operator or one of the operators served by it by setting the "power needed" flag in the two last bits in the returned operator status signal.

In the table below an example is given of the communication flag definition used in the interrogation and operator status signal, i.e. the definition of the individual bits of the above-mentioned bit sequence.

| Bit No. | Controlled by | 0 | 1 |
|---------|---------------|---|---|
| 0 | Hazard control unit | Mains power | Battery power |
| 1 | Hazard control unit | | Operator close |
| 2 | Hazard control unit | | Operator open |
| 3 | Hazard control unit | Oper. power ON | Oper. Power OFF |
| 4 | Interface unit | No power needed | Power request |
| 5 | Interface unit | OK | Operator error |

Whereas bit No. 0 defines, whether the system is in regular operation with connection to the mains power supply or is in a state of battery powered emergency operation, bit No. 1 or bit No. 2 will be set by the hazard control unit 2 to the value 1 as a command to close or open a window, respectively, if definition of the position is needed.

The power needed by operators 1 is distributed from the hazard control unit 7 via the power line 10 and through the interface unit 2, which will include a fuse for each operator 1 served thereby. By setting bit No. 3 to 1 the hazard control unit 7 indicates that operation power is off and thus not available for operation of operators 1, e.g. due to mains power dropout.

If any of operators 1 served by an interface unit 2 is unable to move the window, with which it is connected, to the right position, this will be indicated in the operator status signal by setting bit No. 5 to the value 1 to indicate an error state.

Bit No. 4 is set by the interface unit 2 to the value 1, when a command for operation of any operator served thereby has been received, but not carried out. During emergency operation a user may be permitted e.g. to close an open window or open a closed window, but only once.

Whereas the hazard control unit 7 will normally initiate the communication of interrogation and operator status signals, an interface unit 2 may be allowed to initiate communication, if closing of a window is needed, when power supply is disconnected during emergency operation. This can be done by using the bits received during the immediately preceding test procedure as input to the hazard control unit 7.

When the hazard control unit 7 receives an operator status signal containing a power request, i.e. bit No. 4 in the sequence being set to 1, it will turn on power and communicate a confirmation message to the interface unit with a short time delay, e.g. 0.5 seconds. Moreover, before the hazard control unit 7 disconnects the power supply, it must send a message indicating that disconnection of the power supply will be effected and check that no interface unit has set the power request flag, i.e. the value 1 of bit No. 4.

The hazard control unit 7 will set the individual bits of the bit sequence illustrated in fig. 2 at the time:

$$t_{set} = t_{start} + (1 + n) * 3 * T + BitTimingError,$$

where $t_{start}$ is the time of the start bit front edge, n is the bit number 0...5 and T is the timing unit, e.g. = 1/256 s = 3.906ms.

In the interface unit date sampling will be effected at the time:

$$t_{samp} = t_{start} + (1+n) * 3 * T + T + ResponseTime + BitTimingError,$$

And new output data will be set-up by the interface unit at the time:

$$t_{out} = t_{samp} + ProcessTime$$

The average delay through the interface unit will be equal to:

$$RecvResponseTime + ProcessTime + BitTimingError + T = typical\ 5.9ms.$$

As shown in the simplified block diagram in fig. 3 of the switching arrangement of a hazard control unit embodying the invention the mains power supply may comprise a mains voltage transformer 13, the secondary side of which is connected to diode rectifier bridges 14 to deliver a DC voltage of 24 V for power supply of the interface units 2 and the operators 1 during regular operation.

In case of mains voltage dropout, power supply, when needed for emergency operation, will be provided from an emergency power supply unit 15 such as an accumulator of appropriate capacity. In accordance with the invention the supply of power will normally be disconnected from the interface units 2 by means of a relay controlled switch 16.

For connection of a reduced power supply to the interface units 2 during the regularly repeated test procedure a semiconductor switching member 17 is connected in parallel with the relay switch 16. Power lines 10 and 11 in fig. 1 are connected with relay switch 16 and semiconductor switch 17, respectively.

## Claims

1. A method for controlling the operation of electrical operator devices (1) for movable members by data communication from central control means (3), said operator devices (1) being connected with a mains power supply (5) and being connectable with emergency power supply means (6) for emergency operation, said method comprising the steps of conducting an operability test for said operator devices (1) at regular time intervals and enabling emergency operation by power supply from said emergency power supply means (6) in case of dropout of said mains power supply (5), where during said emergency operation power supply to the operator devices (1) is generally disconnected and said operability test is conducted by temporary connection of power supply from said emergency power supply means (6) to the operator devices (1), and where said general disconnection of power supply to the operator devices (1) as well as the conduct of said operability test during emergency operation is effected by hazard control means (7) provided for selective control of the operator devices (1) in hazard situations, **characterized in that** said operability test comprises transmission of an interrogation signal by said hazard control means (7) to interface means (2) interposed between at least one operator device (1) and said central control means (3), collection by said interface means (2) of an operator status signal for said at least one operator device (1) and return of said operator status signal to said hazard control means (7).

2. A method as claimed in claim 1, **characterized in that** said operator status signal comprises information of the occurrence of an error state in said at least one operator device (1) and/or a need for power supply to the operator device (1) caused by a control command received by said interface means (2) from said central or hazard control means (3,7).

3. A method as claimed in claim 1 and 2, **characterized in that** in response to said interrogation signal a first operator status signal representing the operator status at the preceding operability test is returned by said interface means (2), following which a second interrogation signal is transmitted by the hazard control means (7), said second interrogation signal including indication of power turn-off with a predetermined time delay allowing initialisation of said at least one operator device (1) and data collection by said interface means (2) and, in response to said second interrogation signal, a second operator status signal representing an actual new operator status is returned to the hazard control means (7) by said interface means (2).

4. A method as claimed in any of claims 1 to 3, **characterized in that** said interrogation signal comprises a bit sequence including bits set by said hazard control means representing power supply from either said mains power supply (5) or said emergency power supply means (6) and the state of operation of said hazard control means (7).

5. A method as claimed in claim 4, **characterized in that** the operator status signal is generated by said interface means (2) by setting of additional bits in said bit sequence representing said occurrence of an error state and/or said need for power supply.

6. A method as claimed in any of clams 1 to 5, **characterized in that** said interface means comprises a number of interface units (2) connected with a common central control unit (3) and a common hazard control unit (7) and each serving a number of operator devices (1) and that said interrogation signal is routed serially from the hazard control unit (7) through said number of interface units (2), said additional bits being set by any of said interface units (2).

7. A method as claimed in any of claims 1 to 6, **characterized in that** the power supplied to said operator devices (1) during said temporary connection is at reduced level with respect to mains power supply.

8. A method as claimed in any of claims 1 to 7, **characterized by** its use in a ventilation system, in which said movable members comprise openable windows, doors and/or similar passive ventilation devices and/or accessories for such devices.

9. A control system for the operation of electrical operator devices (1) for movable members by data communication from central control means (3), said operator devices (1) being connected with a mains power supply (5) and being connectable with emergency power supply means (6) for emergency operation, means being provided for conducting an operability test for said operator devices at regular time intervals and for enabling emergency operation by power supply from said emergency power supply means (6) in case of dropout of said mains power supply, wherein means are provided for general disconnection of power supply to the operator devices (1) during said emergency operation and for conducting said operability test by temporary connection of power supply from said emergency power supply means (6) to the operator devices (1), **characterized in that** said means for general disconnection of power supply from the operator devices (1) and conduct of said operability test during emergency operation comprises hazard control means (7) for selective control of the operator devices (1) in hazard situations, and that interface means (2) are interposed between at least one operator device (1) and said central control means (3).

10. A control system as claimed in claim 9, **characterized in that** interface means (2) is interposed between at least one operator device (1) and said central control means (3) and is adapted to respond to an interrogation signal transmitted by said hazard control unit (7) during temporary connection of power supply by collection of an operator status signal for said at least one operator device (1) and return of said operator status signal to said hazard control means (7).

11. A control system as claimed in claim 9 or 10, **characterized in that** said interface means comprises a number of interface units (2) connected with a common central control unit (3) and a common hazard control unit (7) and each serving a number of operator devices (1), said hazard control unit (7) being adapted for serial routing of said interrogation signal through said number of interface units (2).

12. A control system as claimed in any of claims 8 to 11, **characterized by** its use in a ventilation system, in which said movable members comprise openable windows, doors and/or similar passive ventilation devices and/or accessories for such devices.

**Patentansprüche**

1. Verfahren zum Steuern des Betriebs elektrischer Betriebseinrichtungen (1) für bewegliche Elemente durch eine Datenübertragung von einer zentralen Steuereinrichtung (3), wobei die Betriebseinrichtungen (1) mit einer Netzspannungsversorgung (5) verbunden sind und mit einer Notstromversorgungseinrichtung (6) für einen Notbetrieb verbunden werden können, wobei das Verfahren die Schritte eines Durchführens eines Betriebstests für die Betriebseinrichtungen (1) in regelmäßigen Zeitintervallen und ein Aktivieren des Notbetriebs durch eine Stromversorgung über die Notstromversorgungseinrichtung (6) im Falle eines Ausfalls der Netzspannungsversorgung (5) umfasst, wobei während des Notbetriebs eine Stromversorgung für die Betriebseinrichtungen (1) im Allgemeinen abgeschaltet ist und der Betriebstest durch zeitweises Verbinden einer Spannungsversorgung von der Notstromversorgungseinrichtung (6) zu den Betriebseinrichtungen (1) durchgeführt wird und wobei das allgemeine Abschalten der Stromversorgung für die Betriebseinrichtungen (1) sowie das Durchführen des Betriebstests während des Notbetriebs durch eine Gefahrensteuerungseinrichtung (7) bewirkt wird, die zur wahlweisen Steuerung der Betriebseinrichtungen (1) in Gefahrensituationen vorgesehen ist, **dadurch gekennzeichnet, dass** der Betriebstest eine Übertragung eines Abfragesignals durch die Gefahrensteuerungseinrichtung (7) zu einer Schnittstelleneinrichtung (2), die zwischen wenigstens einer Betriebseinrichtung (1) und der zentralen Steuerungseinrichtung (3) angeordnet ist, ein Sammeln eines Betriebsstatussignals für die wenigstens eine Betriebseinrichtung (1) durch die Schnittstelleneinrichtung (2) und ein Zurückgeben des Betriebsstatussignals an die Gefahrensteuerungseinrichtung (7), umfasst.

2. Verfahren nach Anspruch 1, **dadurch gekennzeichnet, dass** das Betriebsstatussignal eine Information über das Auftreten eines Fehlerzustands in der wenigstens einen Betriebseinrichtung (1) und/oder einen Bedarf für eine Spannungsversorgung für die Betriebseinrichtung (1) umfasst, die durch einen Steuerbefehl verursacht sind, der von der Schnittstelleneinrichtung (2), von der zentralen Steuerungseinrichtung (3) oder von der Gefahrensteuerungseinrichtung (7) empfangen werden.

3. Verfahren nach Anspruch 1 und 2, **dadurch gekennzeichnet, dass** in Reaktion auf das Abfragesignal ein erstes Betriebsstatussignal, das den Betriebsstatus bei dem vorhergehenden Betriebstest wiedergibt, von der Schnittstelleneinrichtung (2) zurückgegeben wird, was von einem zweiten Abfragesignal, das von der Gefahrensteuerungseinrichtung (7) übertragen wird, gefolgt ist, wobei das zweite Abfragesignal eine Meldung für ein Stromabschalten nach einer vorgegebenen Zeitverzögerung umfasst, die eine Initialisierung der wenigstens einen Betriebseinrichtung (1) und eine Datenabfrage durch die Schnittstelleneinrichtung (2) erlaubt, und dass, in Reaktion auf das zweite Abfragesignal, ein zweites Betriebsstatussignal, das einen aktuellen neuen Betriebsstatus wiedergibt, durch die Schnittstelleneinrichtung (2) zu der Gefahrensteuerungseinrichtung (7) zurückgegeben wird.

4. Verfahren nach einem der Ansprüche 1 bis 3, **dadurch gekennzeichnet, dass** das Abfragesignal eine Bitfolge aufweist, die Bits umfasst, die durch die Gefahrensteuerungseinrichtung gesetzt werden und die Spannungsversorgung entweder von der Netzspannungsversorgung (5) oder der Notstromversorgungseinrichtung (6) und den Betriebszustand der Gefahrensteuerungseinrichtung (7) wiedergeben.

5. Verfahren nach Anspruch 4, **dadurch gekennzeichnet, dass** das Betriebsstatussignal durch die Schnittstelleneinrichtung (2) erzeugt wird, indem zusätzliche Bits in der Bitfolge gesetzt werden, die das Auftreten eines Fehlerzustands und/oder den Bedarf für eine Spannungsversorgung anzeigen.

6. Verfahren nach einem der Ansprüche 1 bis 5, **dadurch gekennzeichnet, dass** die Schnittstelleneinrichtung eine Anzahl von Schnittstelleneinheiten (2) aufweist, die mit einer gemeinsamen zentralen Steuereinheit (3) und einer gemeinsamen Gefahrensteuerungseinheit (7) verbunden sind und jeweils eine Anzahl von Betriebseinrichtungen (1) bedienen, und dass das Abfragesignal in Serie von der Gefahrensteuerungseinrichtung (7) durch die Anzahl von Schnittstelleneinheiten (2) geleitet wird, wobei die zusätzlichen Bits durch jede der Schnittstelleneinheiten (2) gesetzt werden.

7. Verfahren nach einem der Ansprüche 1 bis 6, **dadurch gekennzeichnet, dass** die zu den Betriebseinrichtungen (1) während der zeitweisen Verbindung gelieferte Leistung relativ zu der Netzspannungsversorgung eine reduzierte Höhe hat.

8. Verfahren nach einem der Ansprüche 1 bis 7, **gekennzeichnet durch** seine Verwendung in einem Belüftungssystem, in dem die beweglichen Elemente Fenster, Türen und/oder ähnliche passive Belüftungseinrichtungen, die geöffnet werden können, und/oder Zusatzbauteile für solche Einrichtungen umfassen.

9. Steuerungssystem für den Betrieb von elektrischen Betriebseinrichtungen (1) für bewegliche Elemente durch eine Datenübertragung von einer zentralen Steuerungseinrichtung (3), wobei die Betriebseinrichtungen (1) mit einer Netzspannungsversorgung (5) verbunden sind und mit einer Notstromversorgungseinrichtung (6) für einen Notbetrieb verbunden werden können, wobei Einrichtungen zum Durchführen eines Betriebstests für die Betriebseinrichtungen in regelmäßigen Zeitintervallen und zum Ermöglichen eines Notbetriebs durch eine Spannungsversorgung durch die Notstromversorgungseinrichtung (6) im Falle eines Ausfalls der Netzspannungsversorgung vorgesehen sind, wobei Einrichtungen für ein allgemeines Abschalten der Spannungsversorgung von den Betriebseinrichtungen (1) während des Notbetriebs und für ein Durchführen des Betriebstests durch ein zeitweises Verbinden der Spannungsversorgung von der Notstromversorgungseinrichtung (6) mit den Betriebseinrichtungen (1) vorgesehen sind, **dadurch gekennzeichnet, dass** die Einrichtung für ein allgemeines Abschalten der Spannungsversorgung von den Betriebseinrichtungen (1) und für ein Durchführen des Betriebstests während des Notbetriebs eine Gefahrensteuerungseinrichtung (7) für eine wahlweise Steuerung der Betriebseinrichtungen (1) in Gefahrensituationen umfasst und dass Schnittstelleneinrichtungen (2) zwischen wenigstens einer Betriebseinrichtung (1) und der zentralen Steuerungseinrichtung (3) vorgesehen sind.

10. Steuerungssystem nach Anspruch 9, **dadurch gekennzeichnet, dass** die Schnittstelleneinrichtung (2) zwischen wenigstens einer Betriebseinrichtung (1) und der zentralen Steuerungseinrichtung (3) angeordnet und angepasst ist, auf ein Abfragesignal, das durch die Gefahrensteuerungseinheit (7) während einer zeitweisen Verbindung der Spannungsversorgung durch Sammeln eines Betriebsstatussignals für die wenigstens eine Betriebseinrichtung (1) und ein Zurückgeben des Betriebsstatussignals an die Gefahrensteuerungseinrichtung (7) übertragen wird, zu antworten.

11. Steuerungssystem nach Anspruch 9 oder 10, **dadurch gekennzeichnet, dass** die Schnittstelleneinrichtung eine Anzahl von Schnittstelleneinheiten (2) umfasst, die mit einer gemeinsamen zentralen Steuerungseinheit (3) und einer gemeinsamen Gefahrensteuerungseinheit (7) verbunden sind, und wobei jede eine Anzahl von Betriebseinrichtungen (1) bedient, wobei die Gefahrensteuerungseinheit (7) für ein serielles Weiterleiten des Abfragesignals durch die Anzahl von Schnittstelleneinheiten (2) angepasst ist.

12. Steuerungssystem nach einem der Ansprüche 8 bis 11, **gekennzeichnet durch** seine Verwendung in einem Lüftungssystem, in dem die beweglichen Elemente Fenster, Türen und/oder ähnliche passive Belüftungseinrichtungen, die geöffnet werden können, und/oder Zusatzeinrichtungen für solche Einrichtungen vorgesehen sind.

## Revendications

1. Procédé pour commander le fonctionnement de dispositifs opérateurs électriques (1) destinés à des éléments mobiles, par l'intermédiaire d'une communication de données à partir de moyens de commande centraux (3), lesdits dispositifs opérateurs (1) étant connectés à une alimentation électrique principale (5) et pouvant être connectés à des moyens d'alimentation électrique d'urgence (6) en vue d'un fonctionnement d'urgence, ledit procédé comprenant les étapes consistant à réaliser un test de fonctionnalité pour lesdits dispositifs opérateurs (1) à intervalles de temps réguliers et à permettre un fonctionnement d'urgence par l'intermédiaire de l'alimentation électrique provenant desdits moyens d'alimentation électrique d'urgence (6) dans le cas d'une défaillance de ladite alimentation électrique principale (5), dans lequel, pendant ledit fonctionnement d'urgence, l'alimentation électrique destinée aux dispositifs opérateurs (1) est généralement déconnectée et ledit test de fonctionnalité est effectué par une connexion temporaire de l'alimentation électrique provenant desdits moyens d'alimentation électrique d'urgence (6) destinés aux dispositifs opérateurs (1), et dans lequel ladite déconnexion générale de l'alimentation électrique destinée aux dispositifs opérateurs (1) de même que la réalisation dudit test de fonctionnalité pendant un fonctionnement d'urgence sont effectuées par des moyens de commande en cas de risque (7) prévus pour une commande sélective des dispositifs opérateurs (1) dans des situations de risque, **caractérisé en ce que** ledit test de fonctionnalité comporte une émission d'un signal d'interrogation par lesdits moyens de commande en cas de risque (7) vers des moyens d'interface (2) interposés entre au moins un dispositif opérateur (1) et lesdits moyens de commande centraux (3), une réception par lesdits moyens d'interface (2) d'un signal d'état d'opérateur destiné audit au moins un dispositif opérateur (1) et un renvoi dudit signal d'état d'opérateur aux dits moyens de commande en cas de risque (7).

2. Procédé selon la revendication 1, **caractérisé en ce que** ledit signal d'état d'opérateur comporte une information de l'occurrence d'un état d'erreur dans ledit au moins un dispositif opérateur (1) et/ou un besoin d'alimentation électrique pour le dispositif opérateur (1) entraîné par une commande de contrôle reçue par lesdits moyens d'interface (2) à partir desdits moyens centraux ou de commande en cas de risque (3, 7).

3. Procédé selon les revendications 1 et 2, **caractérisé en ce que,** en réponse audit signal d'interrogation, un premier signal état d'opérateur représentant l'état d'opérateur au niveau du test de fonctionnalité précédent est renvoyé par lesdits moyens d'interface (2), après quoi un deuxième signal d'interrogation est transmis par les moyens de commande en cas de risque (7), ledit deuxième signal d'interrogation comportant une indication de coupure d'alimentation avec un temps de retard prédéterminé permettant une initialisation dudit au moins un dispositif opérateur (1) et une collecte de données par lesdits moyens d'interface (2), et, en réponse audit deuxième second signal d'interrogation, un deuxième signal d'état d'opérateur représentant un nouvel état réel d'opérateur est renvoyé vers les moyens de commande en cas de risque (7) par lesdits moyens d'interface (2).

4. Procédé selon l'une quelconque des revendications 1 à 3, **caractérisé en ce que** ledit signal d'interrogation comprend une séquence de binaires comprenant des binaires établis par lesdits moyens de commande en cas de risque représentant une alimentation électrique provenant de, soit de ladite alimentation électrique principale (5), soit desdits moyens d'alimentation électrique d'urgence (6) et l'état de fonctionnement desdits moyens de commande en cas de risque (7).

5. Procédé selon la revendication 4, **caractérisé en ce que** le signal d'état d'opérateur est généré par lesdits moyens d'interface (2) en établissant des binaires supplémentaires dans ladite séquence de binaires représentant ladite occurrence d'un état d'erreur et/ou dudit besoin en alimentation électrique.

6. Procédé selon l'une quelconque des revendications 1 à 5, **caractérisé en ce que** lesdits moyens d'interface comportent un certain nombre d'unités d'interface (2) connectées avec une unité de commande centrale commune (3) et à l'unité de commande en cas de risque commune (7) et servant, chacune, un certain nombre de dispositifs opérateurs (1) et **en ce que** ledit signal d'interrogation est acheminé en série à partir de l'unité de commande en cas de risque (7) à travers ledit certain nombre d'unités d'interface (2), lesdits binaires supplémentaires étant établis par l'une quelconque desdites unités d'interface (2).

7. Procédé selon l'une quelconque des revendications 1 à 6, **caractérisé en ce que** le courant fourni aux dits dispositifs opérateurs (1) pendant ladite connexion temporaire est à un niveau réduit par rapport à l'alimentation électrique principale.

8. Procédé selon l'une quelconque des revendications 1 à 7, **caractérisé par** son utilisation dans un système de ventilation, dans lequel lesdits éléments mobiles comportent des fenêtres ouvrables, des portes et/ou des dispositifs de ventilation passive similaires et/ou des accessoires destinés à ces dispositifs.

9. Système de commande servant au fonctionnement de dispositifs opérateurs électriques (1) destinés à des éléments mobiles par une communication de données provenant de moyens de commande centraux (3), lesdits dispositifs opérateurs (1) étant connectés à une alimentation électrique principale (5) et pouvant être connectés à des moyens d'alimentation électrique d'urgence (6) en vue d'un fonctionnement d'urgence, des moyens étant prévus pour réaliser un test de fonctionnalité destiné aux dits dispositifs opérateurs à des intervalles de temps réguliers et pour permettre un fonctionnement d'urgence par une alimentation électrique provenant desdits moyens d'alimentation électrique d'urgence (6) dans le cas d'une défaillance de ladite alimentation électrique principale, dans lequel des moyens sont fournis en vue d'une déconnexion générale de l'alimentation électrique pour les dispositifs opérateurs (1) pendant ledit fonctionnement en urgence et pour effectuer ledit test de fonctionnalité par une connexion temporaire de l'alimentation électrique provenant desdits moyens d'alimentation électrique d'urgence (6) aux dispositifs opérateurs (1), **caractérisé en ce que** lesdits moyens servant à une déconnexion générale de l'alimentation électrique des dispositifs opérateurs (1) et la réalisation dudit test de fonctionnalité lors d'un fonctionnement en urgence comportent des moyens de commande en cas de risque (7) destinés à une commande sélective des dispositifs opérateurs (1) dans des situations de risque, et **en ce que** des moyens d'interface (2) sont interposés entre au moins un dispositif opérateur (1) et lesdits moyens de commande centraux (3).

10. Système de commande selon la revendication 9, **caractérisé en ce que** des moyens d'interface (2) sont interposés entre au moins un dispositif opérateur (1) et lesdits moyens de commande centraux (3) et sont adaptés pour répondre à un signal d'interrogation émis par ladite unité de commande en cas de risque (7) pendant une connexion temporaire de l'alimentation électrique par la réception d'un signal d'état d'opérateur correspondant audit, au moins un, dispositif opérateur (1) et un retour dudit signal d'état d'opérateur vers lesdits moyens de commande en cas de risque (7).

11. Système de commande selon la revendication 9 ou 10, **caractérisé en ce que** lesdits moyens d'interface comportent un certain nombre d'unités d'interface (2) connectées à une unité de commande centrale commune (3) et à une unité de commande en cas de risque commune (7), chacune servant un certain nombre de dispositifs opérateurs (1), ladite unité de commande en cas de risque étant adaptée pour un acheminement série dudit signal d'interrogation à travers ledit certain nombre d'unités d'interface (2).

**12.** Système de commande selon l'une quelconque des revendications 8 à 11, **caractérisé par** son utilisation dans un système de ventilation, dans lequel lesdits éléments mobiles comprennent des fenêtres ouvrantes, des portes et/ou des dispositifs de ventilation passive similaires et/ou des accessoires destinés à ces dispositifs.

Fig 1

**Fig 2**

Interrogation signal

Startbit | Databit 0 | Databit 1 | Databit 2 | Databit 3 | Databit 4 | Databit 5 | Stopbit

operator status signal

T

RecvResponseTime + ProcessTime + BitTimingError

**Fig. 3**

**EP 1 405 013 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0039506 A
- US 5811975 A